# NEUE EUROPÄISCHE PATENTSCHRIFT

(11) **EP 0 730 626 B2**
(45) Veröffentlichungstag und Bekanntmachung des Hinweises auf die Entscheidung über den Einspruch: **13.11.2002**
(45) Hinweis auf die Patenterteilung: 09.09.1998
(21) Anmeldenummer: 95902776.4
(22) Anmeldetag: 19.11.1994
(51) Int. Cl.: C09D 175/04

(54) **AUS ZWEI KOMPONENTEN BESTEHENDES LACKSYSTEM**
TWO-COMPONENT PAINT SYSTEM
SYSTEME DE PEINTURE A DEUX CONSTITUANTS

(30) Priorität: 24.11.1993 DE 4339951
(43) Veröffentlichungstag der Anmeldung: 11.09.1996
(73) Patentinhaber: BASF Coatings Aktiengesellschaft, 48165 Münster (DE)
(72) Erfinder: GRABBE, Michael, D-48308 Senden (DE); MAYER, Bernd, D-48165 Münster (DE); RINK, Heinz-Peter, D-48153 Münster (DE)
(74) Vertreter: Fitzner, Uwe, Dr.
(86) Internationale Anmeldenummer: EP9403832
(87) Internationale Veröffentlichungsnummer: WO95014745

(56) Entgegenhaltungen:
- EP-A- 0 089 497
- EP-A- 0 228 003
- EP-A- 0 299 148
- EP-A- 0 355 433
- EP-A- 0 422 357
- EP-A- 0 458 243
- EP-A- 0 468 293
- EP-A- 0 608 773
- WO-A-91/08269
- WO-A-92/17554
- DE-A- 3 739 332
- US-A- 5 104 922
- US-A- 5 114 485
- Book no. , 1990, 'RöMPPS CHEMIE LEXIKON, 9. AUFL., S. 2426', GEORG THIEME VERLAG, STUTTGART/DE
- Römpp Chemie Lexikon, 9. Auflage, Georg Thieme Verlag, Stuttgart/DE, Band 3, 1990, S. 1750
- Römpp Lexikon Lacke und Druckfarben, Georg Thieme Verlag, Stuttgart/DE, 1998, S. 511
- D. Stoye, W. Freitag (Ed.), Paints, Coatings and Solvents, 2. Aufl., Wiley-VCH angeblich 1998, S. 110
- Book no. , 1990, 'RöMPPS CHEMIE LEXIKON, 9. AUFL., S. 2426', GEORG THIEME VERLAG, STUTTGART/DE
- Book no. , 19-00- 0, 'RöMPPS CHEMIE LEXIKON, 9. AUFL., S. 2426', GEORG THIEME VERLAG, STUTTGART/DE

## Beschreibung

Die Erfindung bezieht sich auf die Verwendung eines aus zwei Komponenten bestehenden Lacksystem zur Herstellung von Autoreparaturlacken und Lacken für Kunststoffe.

In der DE-A-41 10 520 wird ein Mischsystem zur Herstellung von wäßrigen Autoreparaturlacken beschrieben, das darauf beruht, daß Autoreparaturlacke durch Vermischen einer pigmenthaltigen Basisfarbe,die weniger als 5 Gew.% Wasser enthält, mit einer pigmentfreien wäßrigen Komponente hergestellt werden.

Bei dem in der DE-A-41 10 520 beschriebenen, aus zwei Komponenten bestehenden Lacksystem weisen die pigmenthaltigen Basisfarben ungünstige Fließverhalten auf, wodurch sowohl die Dosierbarkeit als auch die Mischbarkeit mit der pigmentfreien wäßrigen Komponente ungünstig beeinflußt wird. Das führt unter anderem dazu, daß die genaue Einstellung von vorgegebenen Farbtönen erschwert wird.

Die der vorliegenden Erfindung zugrundeliegende Aufgabenstellung besteht in der Verwendung eines aus zwei Komponenten bestehenden Lacksystems, das die oben beschriebenen Nachteile nicht aufweist.

Verwendung eines aus einer Komponente (I) und einer Komponente (II) bestehenden Lacksystems für die Herstellung von Autoreparaturtacken und Lacken für Kunststoffsubstrate, worin die Komponente (I) aus
(A) 5 bis 50 Gew.-% mindestens eines wasserlöslichen oder wasserdispergierbaren Bindemittels,
(B) 0 bis 20 Gew.-%. mindestens eines Vernetzungsmittels,
(C) 0,5 bis 60 Gew.-%. mindestens eines effektgebenden Pigments,
(D) 5 bis 80 Gew.-% Wasser,
(E) 0 bis 40 Gew.-% mindestens eines organischen Lösemittels,
(F) 0 bis 5 Gew.-% mindestens eines rheologiesteuernden Additivs, ausgewählt aus der Gruppe der vernetzten polymeren Mikroteilchen, der anorganischen Schichtsilikate und der synthetischen Polymere mit ionischen und/oder assoziativ wirkenden Gruppen, und
(G) 0 bis 10 Gew.-% mindestens eines weiteren üblichen Lackhilfsmittels
   besteht, wobei die Summe der für die Bestandteile (A), (B), (C), (D), (E), (F) und (G) angegebenen Gewichtsprozentangaben stets 100 Gew.-% ergibt und der Bestandteil (A) aus
   - mindestens einem wasserverdünnbaren Polyurethanharz,
   - einer Mischung aus mindestens einem wasserverdünnbaren Polyurethanharz und mindestens einem wasserverdünnbaren Polyesterharz,
   - einer Mischung aus mindestens einem wasserverdünnbaren Polyurethanharz und mindestens einem wasserverdünnbaren Polyacrylatharz oder
   - einer Mischung aus mindestens einem wasserverdünnbaren Polyurethanharz, mindestens einem wasserverdünnbaren Polyesterharz und mindestens einem wasserverdünnbaren Polyacrylatharz besteht,
   und die Komponente (II) aus
(H) 70 bis 99 Gew.-% Wasser
(J) 0 bis 10 Gew.-% mindestens eines organischen Lösemittels
(K) 0.1 bis 10 Gew.-% mindestens eines rheologiesteuernden Additivs gemäß Komponente (F) und
(L) 0 bis 10 Gew.-% mindestens eines weiteren üblichen Lackhilfsmittels
besteht, wobei die Summe der für die Bestandteile (H), (J), (K) und (L) angegebenen Gewichtsprozentangaben stets 100 Gew.-% ergibt.

Die Vorteile der erfindungsgemäßen Verwendung, des aus zwei Komponenten bestehenden Lacksystems bestehen insbesondere darin, daß die Komponenten gut dosier- und mischbar sind, wodurch die Herstellung von Lacken mit vorgegebenen Farbtönen einfach möglich ist. In vielen Fällen ist es nicht mehr notwendig, die mit dem erfindungsgemäßen Lacksystem hergestellten Lacke in einem zusätzlichen Arbeitsschritt auf Verarbeitungsviskosität einzustellen. Ein weiterer Vorteil liegt in der hohen Gefrier-Tau-Stabilität der Komponente (I).

Geeignete Polyurethanharze werden beispielsweise in den folgenden Schriften beschriebenen: EP-A-355 433,
DE-A-35 45 618, DE-A-38 13 866. DE-A-32 10 051,
DE-A-26 24 442, DE-A-37 39 332, US-A-4,719,132,
EP-A-89 497, US-A-4,558,090, US-A-4,489,135,
DE-A-36 28 124, EP-A-158 099, DE-A-29 26 584,
EP-A-195 931, DE-A-33 21 180 und DE-A-40 05 961.

Als Bestandteil (A) in der Komponente (I) werden vorzugsweise Polyurethanharze eingesetzt, die ein zahlenmittleres Molekulargewicht (Bestimmung: gelpermeationschromatographisch mit Polystyrol als Standard) von 1000 bis 30.000, vorzugsweise von 1500 bis 20000, sowie eine Säurezahl von 5 bis 70 mg KOH/g, vorzugsweise 10 bis 30 mg KOH/g aufweisen und durch Umsetzung von isocyanatgruppenhaltigen Präpolymeren mit gegenüber Isocyanatgruppen reaktiven Verbindungen herstellbar sind.

Die Herstellung von isocyanatgruppenhaltigen Präpolymeren kann durch Reaktion von Polyolen mit einer Hydroxylzahl von 10 bis 1800, bevorzugt 50 bis 1200 mg KOH/g, mit überschüssigen Polyisocyanaten bei Temperaturen von bis zu 150 °C, bevorzugt 50 bis 130 °C, in organischen Lösemitteln, die nicht mit Isocyanaten reagieren können, erfolgen. Das Äquivalentverhältnis von NCO- zu OH-Gruppen liegt zwischen 2,0:1,0 und > 1,0:1,0, bevorzugt zwischen 1,4:1 und 1,1:1.

Die zur Herstellung des Präpolymeren eingesetzten Polyole können niedermolekular und/oder hochmolokular sein und reaktionsträge anionische bzw. zur Anionenbildung befähigte Gruppen enthalten. Es können auch niedermolekulare Polyole mit einem Molekulargewicht von 60 bis zu 400, zur Herstellung der isocyanatgruppenhaltigen Präpolymere mitverwendet werden. Es werden dabei Mengen von bis zu 30 Gew.-% der gesamten Polyol-Bestandteile, bevorzugt etwa 2 bis 20 Gew.-%, eingesetzt.
Um ein NCO-Präpolymeres hoher Flexibilität zu erhalten, sollte ein hoher Anteil eines überwiegend linearen Polyols mit einer bevorzugten OH-Zahl von 30 bis 150 mg KOH/g zugesetzt werden. Bis zu 97 Gew.-% des gesamten Polyols können aus gesättigten und ungesättigten Polyestern und/oder Polyethern mit einer Molmasse Mn von 400 bis 5000 bestehen. Die ausgewählten Polyetherdiole sollen keine übermäßigen Mengen an Ethergruppen einbringen, weil sonst die gebildeten Polymere in Wasser anquellen. Polyesterdiole werden durch Veresterung von organischen Dicarbonsäuren oder ihren Anhydriden mit organischen Diolen hergestellt oder leiten sich von einer Hydroxicarbonsäure oder einem Lacton ab. Um verzweigte Polyesterpolyole herzustellen, können in geringem Umfang Polyole oder. Polycarbonsäuren mit einer höheren Wertigkeit eingesetzt werden.

Als typische multifunktionelle Isocyanate werden aliphatische, cycloaliphatische und/oder aromatische Polyisocyanate mit mindestens zwei Isocyanatgruppen pro Molekül verwendet. Bevorzugt werden die Isomeren oder Isomerengemische von organischen Diisocyanaten. Aufgrund ihrer guten Beständigkeit gegenüber ultraviolettem Licht ergeben (cyclo)aliphatische Diisocyanate Produkte mit geringer Vergilbungsneigung.Die zur Bildung des Präpolymeren gebrauchte PolyisocyanatKomponente kann auch einen Anteil höherwertiger Polyisocyanate enthalten, vorausgesetzt dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Die mittlere Funktionalität kann gegebenenfalls durch Zusatz von Monoisocyanaten gesenkt werden.

Als Beispiele für einsetzbare Polyisocyanate werden Phenylendiisocyanat, Toluylendiisocyanat, Xylylendiisocyanat, Bisphenylendiisocyanat, Naphtylendiisocyanat, Diphenylmethandiisocyanat, Isophorondiisocyanat, Cyclopentylendiisocyanat, Cyclohexylendiisocyanat, Methylcyclohexylendiisocyanat, Dicyclohexylmethandiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat genannt.

Polyurethane sind im allgemeinen nicht mit Wasser verträglich, wenn nicht bei ihrer Synthese spezielle Bestandteile eingebaut und/oder besondere Herstellungsschritte vorgenommen werden. So können zur Herstellung der Polyurethanharze Verbindungen verwendet werden, die zwei mit Isocyanatgruppen reagierende H-aktive Gruppen und mindestens eine Gruppe enthalten, die die Wasserdispergierbarkeit gewährleistet. Geeignete Gruppen dieser Art sind nicht-ionische Gruppen (z. B. Polyether), anionische Gruppen, Gemische dieser beiden Gruppen oder kationische Gruppen.

Zur Einführung von anionischen Gruppen in Polyurethanharzmoleküle dienen Verbindungen, die mindestens eine gegenüber Isocyanatgruppen reaktive Gruppe und mindestens eine zur Anionenbildung befähigte Gruppe enthalten. Geeignete gegenüber Isocyanatgruppen reaktive Gruppen sind insbesondere Hydroxylgruppen sowie primäre und/oder sekundäre Aminogruppen. Gruppen, die zur Anionenbildung befähigt sind, sind Carboxyl-, Sulfonsäure- und/oder Phosphonsäuregruppen. Vorzugsweise werden Alkansäuren mit zwei Substituenten am α-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Das Carboxylgruppen enthaltene Polyol kann 3 bis 100 Gew.-%, vorzugsweise 5 bis 50 Gew.-%, des gesamten Polyolbestandteiles im NCO-Präpolymeren ausmachen.

Die Isocyanatgruppen des isocyanatgruppenhaltigen Präpolymers werden mit einem Modifizierungsmittel umgesetzt. Das Modifizierungsmittel wird dabei vorzugsweise in einer solchen Menge zugegeben, daß es zu Kettenverlängerungen und damit zu Molekulargewichtserhöhungen kommt. Als Modifizierungsmittel werden vorzugsweise organische Verbindungen, die Hydroxyl- und/oder sekundäre und/oder primäre Aminogruppen enthalten, insbesondere Di-, Tri- und/oder höherfunktionelle Polyole, eingesetzt. Als Beispiel für einsetzbare Polyole werden Trimethylolpropan, 1,3,4 Butantriol, Glycerin, Erythrit, Mesoerythrit, Arabit, Adonit usw. genannt. Bevorzugt wird Trimethylolpropan eingesetzt.

Als Bestandteil (A) in der Komponente (I) können im Prinzip alle für wäßrige Lacke geigneten wasserlöslichen oder wasserdispergierbaren Polyacrylatharze eingesetzt werden. Derartige Harze sind in einer großen Vielzahl beschrieben und in großer Auswahl im Handel erhältlich. Besonders geeignete Polyacrylatharze sind in der DE-A-38 32 826 und in der DE-A-38 41 540 beschrieben.

Als Bestandteil (A) in der Komponente (1) können auch wasserlösliche oder wasserdispergierbare Polyesterharze eingesetzt werden.

Der Bestandteil (A) besteht aus mindestestens einem wasserverdünnbaren Polyurethanharz oder aus einer Mischung aus mindestens einem wasserverdünnbaren Polyurethanharz und mindestens einem wasserverdünnbaren Polyesterharz und/oder mindestens einem wasserverdünnbaren Polyacrylatharz.

Als Bestandteil (B) in der Komponente (I) können beispielsweise blockierte Polyisocyanate und/oder wasserlösliche oder wasserdispergierbare Aminoplastharze eingesetzt werden. Bevorzugt werden - gegebenenfalls in Anwesenheit von Colösemitteln - wasserlösliche oder wasserdispergierbare Melaminharze eingesetzt. Es handelt sich hierbei im allgemeinen um veretherte Melamin-Formaldehyd-Kondensationsprodukte. Die Wasserlöslichkeit bzw. Wasserdispergierbarkeit der Aminoplastharze hängt - abgesehen vom Kondensationsgrad, der möglichst gering sein soll - von der Veretherungskomponente ab, wobei nur die niedrigsten Glieder der Alkohol bzw. Ethylenglykolmonoetherreihe wasserlösliche Kondensate ergeben. Die größte Bedeutung haben die mit Methanol veretherten Melaminharze. Bei Verwendung von Lösungsvermittlem können auch butanolveretherte Melaminharze in wäßriger Phase dispergiert werden. Es besteht auch die Möglichkeit, Carboxylgruppen in das Kondensat einzufügen. Umetherungsprodukte hochveretherter Formaldehydkondensate mit Oxycarbonsäuren sind über ihre Carboxylgruppen nach Neutralisation wasserlöslich.

Die Komponente (I) kann als Bestandteil (C) alle lacküblichen Effektpigmente, die mit Wasser nicht reagieren bzw. sich in Wasser nicht lösen, enthalten. Die Pigmente können aus anorganischen oder organischen Verbindungen bestehen.

Als Effektpigmente können Metallplättchenpigmente wie handelsübliche Aluminiumbronzen, gemäß DE-A-36 36 183 chromatierte Aluminiumbronzen, und handelsübliche Edelstahlbronzen sowie nicht metallische Effektpigmente, wie zum Beispiel Perlglanz- bzw. Interferenzpigmente, eingesetzt werden.

Als Bestandteil (E) kann die Komponente (I) mindestens ein organisches Lösemittel enthalten. Beispiele für geeignete Lösemittel sind insbesondere wassermischbare Lösemittel, wie z.B. Alkohole, Ester, Ketone, Ketoester, Glykoletherester u.ä. Bevorzugt eingesetzt werden Alkohole und Glykolether, besonders bevorzugt Butylglykol und Butanole.

Als Bestandteil (F) kann die Komponente (I) mindestens ein rheologiesteuerndes Additiv enthalten. Als rheologiesteuernde Additive werden eingesetzt :vernetzte polymere Mikroteilchen, wie sie beispielsweise in der EP-A-38 127 offenbart sind, anorganische Schichtsilikate, wie z.B. Aluminium-Magnesium-Silikate, Natrium-Magnesium-Schichtsilikate und Natrium-Magnesium-Fluor-Lithium-Schichtsilikate des Montmorillonit-Typs, sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxilierte Urethane oder Polyacrylate. Bevorzugt werden als rheologiesteuemde Additive anorganische Schichtsilikate eingesetzt. Besonders bevorzugt wird eine Kombination aus einem carboxylgruppenhaltigen Polyacrylatharz mit einer Säurezahl von 60 bis 780, bevorzugt 200 bis 500 mg KOH/g und einem Natrium-Magnesium-Schichtsilikat als rheologiesteuerndes Additiv eingesetzt.

Das Natrium-Magnesium-Schichtsilikat wird zweckmäßigerweise in Form einer wäßrigen Paste in die Lackkomponente eingearbeitet. Die Paste enthält vorzugsweise 3 Gew.-% Schichtsilikat sowie 3 Gew.-% Polypropylenglykol oder 2 Gew.-% Schichtsilikat und 0,6 Gew.-% Polypropylenglykol oder 2 Gew.-% Schichtsilikat und 2 Gew.-% anderer handelsüblicher oberflächenaktiver Substanzen, wobei alle Prozentangaben auf das Gesamtgewicht der Paste bezogen sind. Die Komponente (I) des erfindungsgemäßen Lacksystems sollte vorzugsweise kein rheologiesteuerndes Additiv, insbesondere kein anorganisches Schichtsilikat als rheologiesteuemdes Additiv enthalten. Die für die mit dem erfindungsgemäßen Lacksystem herstellbaren Lacke notwendigen rheologiesteuemden Additive sollten vorzugsweise ausschließlich in der Komponente (II) enthalten sein. Es ist besonders bevorzugt, daß in den Fällen, in denen ein anorganisches Schichtsilikat als rheologiesteuerndes Additiv eingesetzt wird, das anorganische Schichtsilikat auschließlich in der Lackkomponente (II) enthalten ist.

Die Komponente (I) kann außerdem Bestandteil (F) als Bestandteil (G) mindestens noch ein weiteres übliches Lackadditiv enthalten. Beispiele für derartige Additive sind Entschäumer, Dispergierhilfsmittel, Emulgatoren, und Verlaufshilfsmittel.

Die Herstellung der Komponente (I) erfolgt nach dem Fachmann bekannten Methoden durch Mischen und ggf. Dispergieren der einzelnen Bestandteile.

Die Einarbeitung der Effektpigmente erfolgt üblicherweise durch homogenes Mischen der Effektpigmente mit einem oder mehreren Lösemitteln. Diese Mischung wird dann in eine Mischung eines oder mehrerer der obenbeschriebenen Bindemittel, ggf. unter Zusatz von weiteren organischen Lösemitteln, mittels eines Rührers oder Dissolvers eingerührt.

Die Bestandteile (J), (K) und (L) der Lackkomponente (II) entsprechen den Bestandteilen (E), (F) und (G) der Lackkomponente (I).

Das erfindungsgemäße Lacksystem ist zur Herstellung wäßriger Lacke, die einen genau vorgegebenen Farbton aufweisen sollen, geeignet. Durch Vermischen entsprechend pigmentierter Lackkomponenten (I) in zur Erreichung der entsprechenden Farbtöne notwendigen Mengenverhältnissen und Zugabe der Lackkomponente (II) können farbtongenaue, sofort verarbeitbare wäßrige Lacke erhalten werden. Das ertindungsgemäße Lacksystem ist insbesondere für Mischsysteme zu Herstellung von Autoreparaturlacken (vgl z. B. Glasurit-Handbuch, 11. Auflage, Kurt R., Vincentz-Verlag, Hannover 1984, Seiten 544 bis 547) geeignet. Mit dem erfindungsgemäßen Lacksystem können selbstverständlich auch Lacke für andere Anwendungsbereiche wie z. B die Lackierung von Kunststoffen oder die Serienlakkierung von Kraftfahrzeugkarosserien hergestellt werden.

Im folgenden wird die Erfindung anband von Ausführungsbeispielen näher erläutert. Alle Angaben über Teile und Prozente stellen dabei Gewichtsangaben dar, falls nicht ausdrücklich etwas anderes vermerkt ist.

### 1. Herstellung einer organischen Polyurethanharzlösung

In einem geeigneten Reaktionsgefäß mit Rührer, Rückflußkühler und Zulaufgefäß werden unter Schutzgas 686,3 g eines Polyesters mit einem zahlenmittleren Molekulargewicht von 1400 auf Basis einer handelsüblichen ungesättigten Dimerfettsäure (mit einer Jodzahl von 10 mg J₂/g, einem Monomerengehalt von maximal 0,1 %, einem Trimerengehalt von maximal 2 %, einer Säurezahl von 195 bis 200 mgKOH/g und einer Verseifungszahl von 197 bis 202 mgKOH/g), Isophthalsäure und Hexandiol vorgelegt und nacheinander mit 10,8 g Hexandiol, 55,9 g Dimethylolpropionsäure, 344,9 g Methylethylketon und 303,6 g 4,4'-Di-(isocyanatocyclohexyl)methan versetzt. Diese Mischung wird so lange unter Rückfluß gehalten, bis der Isocyanatgehalt auf 1,0 % abgesunken ist. Anschließend werden dem Gemisch 26,7 g Trimethylolpropan zugegeben und bis zu einer Viskosität von 12 dPas (bei einer Anlösung von einem Teil Harzlösung in einem Teil N-Methylpyrrolidon) unter Rückfluß gehalten. Dann werden 1378,7 g Butylglykol zugegeben. Nach einer Vakuumdestillation, in der das Methylethylketon entfernt wird, wird die Harzlösung mit 32,7 g Dimethylethanolamin neutralisiert. Der Feststoffgehalt der resultierenden Harzlösung beträgt 44 %.Unter intensivem Rühren wird durch Zugabe von Butylglykol auf einen Festkörper von 41 Gew.% verdünnt.

### 2. Herstellung einer wäßrigen Polyurethanharzdispersion

In einem geeigneten Reaktionsgefäß mit Rührer, Rückflußkühler und Zulaufgefäß werden unter Schutzgas 686,3 g eines Polyesters mit einem zahlenmittleren Molekulargewicht von 1400 auf Basis einer handelsüblichen ungesättigten Dimerfettsäure (mit einer Jodzahl von 10 mgJ₂/g, einem Monomergehalt von maximal 0,1 %, einem Trimerengehalt von maximal 2 %, einer Säurezahl von 195 bis 200 mgKOH/g und einer Verseifungszahl von 197 bis 202 mgKOH/g), Isophthalsäure und Hexandiol vorgelegt und nacheinander mit 10,8 g Hexandiol, 55,9 g Dimethylolpropionsäure, 344,9 g Methylethylketon und 303,6 4,4'-Di-(isocyanatocyclohexyl) methan versetzt. Diese Mischung wird so lange unter Rückfluß gehalten, bis der Isocyanatgehalt auf 1,0 % abgesunken ist. Anschließend werden dem Gemisch 26,7 g Trimethylolpropan zugegeben und bis zu einer Viskosität von 12 dPas (bei einer Anlösung von einem Teil Harzlösung in einem Teil N-Methylpyrrolidon) unter Rückfluß gehalten. Durch Zugabe von 47,7 g Butylglykol wird eventuell vorhandenes überschüssiges Isocyanat vernichtet. Anschließend werden dem Reaktionsgemisch 32,7 g Dimethylethanolamin, 2688,3 g entionisiertes Wasser und 193,0 g Butylglykol unter starkem Rühren zugegeben. Nach dem Entfernen des Methylethylketons mittels Vakuumdestillation erhält man eine wäßrige Dispersion mit einem Feststoffgehalt von ca. 27 %.

### 3. Herstellung von Pigmentpasten

### 3.1 Herstellung einer Aluminiumpignent enthaltenden Pigmentpaste

15,5 Teile einer gemäß DE-OS-36 36 183 chromatierten Aluminiumbronze (Aluminiumgehalt 65 %, durchschnittlicher Teilchendurchmesser 15 µm) werden in 14 Teilen Butylglykol durch 15 minütiges Rühren homogen verteilt und anschließend in eine Mischung aus 51 Teilen der gemäß Punkt 1. hergestellten Polyurethanharzlösung, 19,5 Teilen eines handelsüblichen, methanolveretherten Melaminharzes (75 %ig in iso-Butanol) und 10 Teilen Butylglykol unter Rühren einfließen gelassen. Diese Mischung wird weitere 30 Minuten mit einem Schnellrührer bei 1000 U/min gerührt.

### 3.2 Herstellung einer blaupigmentierten Pigmentpaste als Vergleich

7 Teile Paliogenblau, 57 Teile der gemäß Punkt 1. hergestellten Polyurethanharzlösung , 15 Teile Butylglykol und 21 Teile eines handelsüblichen, methanolveretherten Melaminharzes (75%igen in iso-Butanol) werden unter Rühren vermischt und in einer Sandmühle dispergiert.

### 4.1 Herstellung der Komponente (I)

30 Teile der gemäß Punkt 3.1 hergestellten Pigmentpaste werden mit 40 Teilen der gemäß Punkt 2. hergestellten wäßrigen Polyurethanharzdispersion und 30 Teilen entionisiertem Wasser gut vermischt. Die auf diese Weise erhaltene Komponente (I) ist gut dosierbar, ist mit andersfarbig pigmentierten Komponenten (I) wie z.B. der Komponente von Versuch 4.2 (vgl. unten) sehr gut mischbar und weist eine ausgezeichnete Lagerstabilität auf.

### 4.2 Herstellung einer andersfarbig pigmentierten (Vergleich) Komponente

30 Teile der gemäß Punkt 3.2 hergestellten Pigmentpaste werden mit 40 Teilen der gemäß Punkt 2. hergestellten wäßrigen Polyurethanharzdispersion und 30 Teilen entionisiertem Wasser gut vermischt.

### 5. Herstellung einer erfindungsgemäßen Komponente (II)

Zu 57,5 Teilen einer vorgequollenen wäßrigen Paste, enthaltend 3 Gew.-% eines anorganischen Natrium-Magnesium-Schichtsilikat-Verdickungsmittels und 3 Gew.-% Polypropylenglykol mit einem zahlenmittleren Molekulargewicht von 900, wobei die Prozentangaben auf das Gesamtgewicht der Paste bezogen sind, werden 35,5 Teile entionisiertes Wasser, 1,5 Teile Butylglykol, 0,5 Teile eines handelsüblichen Entschäumers und 5 Teile einer 3,5 %igen Lösung eines handelsüblichen Polyacrylatverdickers in Wasser unter Rühren zugesetzt. Die so hergestellte Komponente (II) ist mit der gemäß Punkt 4.1 hergestellten Komponenten (I) sehr gut mischbar und weist eine ausgezeichnete Lagerstabilität auf.

## Patentansprüche

1. Verwendung eines aus einer Komponente (I) und einer Komponente (II) bestehenden Lacksystems für die Herstellung von Autoreparaturlacken und Lacken für Kunststoffsubstrate, worin die Komponente (I) aus
(A) 5 bis 50 Gew.-% mindestens eines wasserlöslichen oder wasserdispergierbaren Bindemittels,
(B) 0 bis 20 Gew.-%. mindestens eines Vernetzungsmittels,
(C) 0,5 bis 60 Gew.-%. mindestens eines effektgebenden Pigments,
(D) 5 bis 80 Gew.-% Wasser,
(E) 0 bis 40 Gew.-% mindestens eines organischen Lösemittels,
(F) 0 bis 5 Gew.-% mindestens eines rheologiesteuernden Additivs, ausgewählt aus der Gruppe der vernetzten polymeren Mikroteilchen, der anorganischen Schichtsilikate und der synthetischen Polymere mit ionischen und/oder assoziativ wirkenden Gruppen, und
(G) 0 bis 10 Gew.-% mindestens eines weiteren üblichen Lackhilfsmittels
besteht, wobei die Summe der für die Bestandteile (A), (B), (C), (D), (E), (F) und (G) angegebenen Gewichtsprozentangaben stets 100 Gew.-% ergibt und der Bestandteil (A) aus
- mindestens einem wasserverdünnbaren Polyurethanharz,
- einer Mischung aus mindestens einem wasserverdünnbaren Polyurehanharz und mindestens einem wasserverdünnbaren Polyesterharz,
- einer Mischung aus mindestens einem wasserverdünnbaren Polyurethanharz und mindestens einem wasserverdünnbaren Polyacrylatharz oder
- einer Mischung aus mindestens einem wasserverdünnbaren Polyurethanharz, mindestens einem wasserverdünnbaren Polyesterharz und mindestens einem wasserverdünnbaren Polyacrylatharz besteht,
und die Komponente (II) aus
(H) 70 bis 99 Gew.-% Wasser
(J) 0 bis 10 Gew.-% mindestens eines organischen Lösemittels
(K) 0.1 bis 10 Gew.-% mindestens eines rheologiesteuernden Additivs gemäß Komponente (F) und
(L) 0 bis 10 Gew.-% mindestens eines weiteren üblichen Lackhilfsmittels
besteht, wobei die Summe der für die Bestandteile (H), (J), (K) und (L) angegebenen Gewichtsprozentangaben stets 100 Gew.-% ergibt.

2. Verwendung nach Anspruch 1, **dadurch gekennzeichnet, dass** der Bestandteil (B) aus mindestens einem Aminoplastharz oder aus mindestens einem blockierten Polyisocyanat oder aus einer Mischung aus mindestens einem Aminoplastharz und mindestens einem blockierten Polyisocyanat besteht.

3. Verwendung nach Anspruch 1 oder 2, **dadurch gekennzeichnet, dass** der Bestandteil (K) ein anorganisches Schichtsilikat ist.

## Claims

1. Use of a paint system composed of a component (I) and a component (II) for the production of automotive refinishes and paints for plastics substrates, in which component (I) comprises
(A) from 5 to 50% by weight of at least one water-soluble or water-dispersible binder,
(B) from 0 to 20% by weight of at least one crosslinking agent,
(C) from 0.5 to 60% by weight of at least one effect pigment,
(D) from 5 to 80% by weight of water,
(E) from 0 to 40% by weight of at least one organic solvent
(F) From 0 to 5% by weight of at least one rheology-controlling additive, selected from the group consisting of crosslinked polymeric microparticles, inorganic phyllosilicates and synthetic polymers having ionic and/or associatively acting groups, and
(G) from 0 to 10% by weight of at least one further conventional paint auxiliary,
the sum of the percentages by weight indicated for components (A), (B), (C), (D), (E), (F), and (G) always being 100% by weight, and constituent (A) (II) comprises
- at least one water-dilutable polyurethane resin,
- a mixture of at least one water-dilutable polyurethane resin and at least one water-dilutable polyester resin,
- a mixture of at least one water-dilutable polyurethane resin and at least one water-dilutable polyacrylate resin or
- a mixture of at least one water-dilutable polyurethane resin, at least one water-dilutable polyester resin and at least one water-dilutable polyacrylate resin,
and component (II) comprises
(H) from 70 to 99% by weight of water,
(J) from 0 to 10% by weight of at least one organic solvent,
(K) from 0.1 to 10% by weight of at least one rheology-controlling additive according to component (F), and
(L) from 0 to 10% by weight of at least one further conventional paint auxiliary,
the sum of the percentages by weight indicated for components (H), (J), (K), (J) and (L) always being 100% by weight.

2. Use according to claim 1, **characterized in that** constituent (B) consists of at least one amino resin or of at least one blocked polyisocyanate or of a mixture of at least one amino resin and at least one blocked polyisocyanate.

3. Use according to claim 1 or 2, **characterized in that** constituent (K) is an inorganic phyllosilicate.

## Revendications

1. Utilisation d'un système de peinture constitué d'un composant (I) et d'un composant (II), pour la fabrication de peintures de réparation d'automobiles et de peintures pour subjectiles en matière plastique, dans lequel le composant (I) est constitué de
(A) 5 à 50 % en poids d'au moins un liant soluble dans l'eau ou dispersable dans l'eau,
(B) 0 à 20 % en poids d'au moins un agent de réticulation,
(C) 0,5 à 60 % en poids d'au moins un pigment à effet,
(D) 5 à 80 % en poids d'eau,
(E) 0 à 40 % en poids d'au moins un solvant organique,
(F) 0 à 5 % en poids d'au moins un additif réglant la rhéologie, choisi dans le groupe des microparticules polymères réticulées, des silicates lamellaires minéraux et des polymères synthétiques comportant des groupes ioniques et/ou à action associative, et
(G) 0 à 10 % en poids d'au moins un autre adjuvant usuel pour peintures, la somme des pourcentages en poids indiqués pour les constituants (A), (B), (C), (D), (E), (F) et (G) étant toujours de 100 % en poids, et le constituant (A) consistant en
- au moins une résine polyuréthanne diluable à l'eau,
- un mélange d'au moins une résine polyuréthanne diluable à l'eau et d'au moins une résine polyester diluable à l'eau,
- un mélange d'au moins une résine polyuréthanne diluable à l'eau et d'au moins une résine polyacrylate diluable à l'eau ou
- un mélange d'au moins une résine polyuréthanne diluable à l'eau, au moins une résine polyester diluable à l'eau et au moins une résine polyacrylate diluable à l'eau,
et le composant (II) est constitué de
(H) 70 à 99 % en poids d'eau,
(J) 0 à 10 % en poids d'au moins un solvant organique,
(K) 0,1 à 10 % en poids d'au moins un additif réglant la rhéologie, selon le composant (F), et
(L) 0 à 10 % en poids d'au moins un adjuvant usuel pour peintures,
la somme des pourcentages en poids indiqués pour les constituants (H), (J), (K) et (L) étant toujours de 100 % en poids.

2. Utilisation selon la revendication 1, **caractérisée en ce que** le constituant (B) consiste en au moins un aminoplaste ou en au moins un polyisocyanate bloqué ou en un mélange d'au moins un aminoplaste et au moins un potyisocyanate bloqué.

3. Utilisation selon la revendication 1 ou 2, **caractérisée en ce que** le constituant (K) est un silicate lamellaire minéral.
